# EUROPEAN PATENT SPECIFICATION

(11) **EP 3 655 593 B1**
(45) Date of publication and mention of the grant of the patent: **23.08.2023**
(21) Application number: 18768960.9
(22) Date of filing: 17.07.2018
(51) Int. Cl.: E03F 1/00, E01C 11/22, E03F 3/04

(54) **INFILTRATION GUTTER, INTERNAL LINING AND INFILTRATION SYSTEM**
VERSICKERUNGSRINNE, INNERE VERKLEIDUNG UND VERSICKERUNGSVORRICHTUNG
GOUTTIÈRE D'INFILTRATION, DOUBLURE INTERNE ET SYSTÈME D'INFILTRATION

(30) Priority: 18.07.2017 NL 2019270
(43) Date of publication of application: 27.05.2020
(73) Proprietor: ACO Ahlmann SE & Co. KG, 24782 Büdelsdorf (DE)
(72) Inventor: DOUWENGA, Frank, 7006 RD Doetinchem (NL); VAN OLST, Herman Fabio, 7006 RD Doetinchem (NL); HULST, Henderikus, 7006 RD Doetinchem (NL)
(74) Representative: Patentwerk B.V.
(86) International application number: PCT/NL2018/050497
(87) International publication number: WO 2019/017781

(56) References cited:
- WO-A1-2013/072082
- WO-A1-2014/029874
- DE-A1-102005 008 819
- KR-A- 20110 124 648
- KR-A- 20120 047 400

## Description

The invention relates to an infiltration gutter according to claim 1 for drainage and soil infiltration of water. The invention also relates to an infiltration system comprising a plurality of infiltration gutters of this type.

For the draining of (rain)water from a ground surface, gutters which collect the water and deliver it to the system of sewers are used. A known drawback of the draining of rainwater via the sewer is that the water supply to a waste water purification plant increases, whereby purification becomes more difficult and/or more expensive. Also, the draining of rainwater through the sewer has a - generally detrimental - effect on the groundwater level. In addition, a sewer is generally not dimensioned to be able to handle large quantities of water (peak load) resulting from heavy or prolonged precipitation sufficiently rapidly. In order to prevent waterlogging, the excess waste water is in such cases is often spilled over onto the surface water, whereby the waste materials can make their way out of the waste water into the surface water.

As an alternative to the drainage of rainwater to the sewer, infiltration facilities - such as infiltration pipes, crates or water permeable paving - are used, whereby water is capable of infiltrating into the subsoil. An example of an infiltration gutter for drainage and soil filtration of water is disclosed in Korean Patent publication KR 10201101246848. In this document an infiltration gutter is disclosed wherein a housing has a water-permeable top cover for the entry of water. The water enters the infiltration gutter, which is provided with an outer and a ceramic inner wall, a purifier unit and the water is discharged through a discharge pipe. The drainage of rainwater via the sewer is herewith by-passed, with the result that sewer and waste water treatment are not placed under excessive load. Moreover, infiltration facilities of this type help to maintain the groundwater level. However, as a result of pollution transported with the rainwater, existing infiltration facilities are often prone to blockage, whereby the capacity to infiltrate water into the soil diminishes, or even totally disappears, after the passage of time. Further examples of infiltration gutters according to the state of the art are also dislcsoed in KR20120047400A, KR20110124648A, DE102005008819A1.

An object of the invention is therefore to provide a way of effectively and permanently draining water, and rainwater in particular, and having it infiltrate into the soil, or of offering an alternative to existing water drainage and infiltration facilities.

For this purpose, the invention provides an infiltration gutter for drainage and soil infiltration of water, comprising: an elongated housing having a water-permeable top side, and an internal lining, fitted in the housing and manufactured from a water-absorbent material, which is provided with a channel that is open on the top side, wherein the housing, on a longitudinal side, is provided with at least one opening situated at a distance from the water-permeable top side, wherein the internal lining connects to at least one water conductor manufactured from water-absorbent material, wherein the water conductor is fed at least partially through at least one of the at least one opening in the housing. Through the use of the aforementioned elongated housing, a gutter with which water that makes its way via the water-permeable top side into the gutter can be collected and drained off is formed. For this purpose, the housing has a gutter-shaped cross section, which, where appropriate, describes a circular segment or a part of a polygon. The water-permeable top side of the housing can herein be partially, but also completely open, in order to collect the water, via the top side of the infiltration gutter, in the gutter. Furthermore, the housing is on the face end generally provided with one or a plurality of holes and/or recesses, which, when infiltration gutters are linked together at their face end, connect together to form a continuous gutter consisting of a plurality of infiltration gutters. The housing additionally acts as a support for the internal lining, wherein it lends the infiltration gutter generally the required strength and rigidity for placement in or on a subsoil. Where appropriate, the housing makes it possible to incorporate the infiltration gutter in road surfaces, wherein the infiltration gutter, on the top side, can be subjected to load by traffic. Through the use of the internal lining which is manufactured from water-absorbent material, the infiltration gutter is also capable of absorbing water and delivering it to the soil. Water that makes its way via the water-permeable top side of the infiltration gutter into the infiltration gutter is taken up by the internal lining and can hereupon be (temporarily) retained by the internal lining. The internal lining has, apart from a water-absorbing effect, normally also a filtering effect, wherein pollutants present in the water, in an advantageous case, are captured already on the surface of the internal lining, with the result that the pollutants downstream in the infiltration gutter and/or water drainage systems possibly connected thereto cannot cause any blockages. In the internal lining is provided a channel, open on the top side, in which the water can likewise, generally briefly, reside and can distribute itself over the surface of the internal lining before being taken up by the internal lining. Through the provision of such a channel, the top surface of the internal lining is, furthermore, effectively enlarged, which increases the rate at which water can be taken up by the internal lining. Since the channel is open on the top side, water that flows into the infiltration gutter makes its way directly into the channel, whereby the channel fulfils a buffer function. Moreover, the open top side of the channel makes simple cleaning thereof possible. It is nevertheless likewise conceivable that the internal lining of the infiltration gutter is not provided with such a channel that is open on the top side. The water absorbed by the internal lining can leave the infiltration gutter through the at least one opening, situated at a distance from the water-permeable top side, in the housing, where the water infiltrates into the soil. Where appropriate, the housing, with the exception of openings provided in the water-permeable top side and the at least one opening provided at a distance from the water-permeable top side, is closed on the longitudinal side for the sake of rigidity.

In a possible embodiment of the infiltration gutter according to the invention, the internal lining is manufactured from mineral wool, and, in particular, rock wool and/or glass wool. As a result of the open structure, mineral wool is capable of absorbing and retaining large quantities of water. The open structure also makes the mineral wool light in weight, which facilitates installation in a housing. The specific open structure of the mineral wool here makes the internal lining capable of acting as a filter for pollution present in the water. In addition, mineral wool is flexible, whereby the internal lining, even without further connecting means, can be fixed in the housing by means of clamping. Further advantages of mineral wool are the durability, both in use and in production, as well as the cost-effective production thereof. All these properties make mineral wool extremely suitable for use in the internal lining of the infiltration gutter according to the invention.

In an advantageous case, the internal lining is manufactured from a material having an open space percentage between 90 and 98 percent, and. in particular, between 95 and 97 percent. The open space percentage of the material from which the internal lining is manufactured largely determines the absorbing capacity of the internal lining. Materials having the aforementioned open space percentages make the internal lining capable of absorbing quantities of water that, in typical precipitation scenarios, are taken in by the infiltration gutter. The flow rate of the material also plays an important role herein, and in an advantageous case is more than 100 metres per day.

In a further embodiment of the infiltration gutter according to the invention, the internal lining forms the outer surface of the channel. The outer surface of the channel is hereby substantially uncovered, whereby water is capable of penetrating directly into the internal lining. Moreover, it is hereby prevented that pollutants such as sand, sludge or organic residues which are usually transported with the (rain)water can accumulate in a sheath fitted on the outer side of the internal lining, whereby the water is capable, in (heavily) reduced measure, of being absorbed by the internal lining. This is typically the case if the water-absorbent material is surrounded by an additional layer (such as a geotextile). Although it is possible, within the scope of the invention, to surround the internal lining with such a sheath, the use of the sheath will in the course of time generally ensure a reduced water absorption by the internal lining. This should be taken into account in the choice of a possible sheath.

It is advantageous if the internal lining extends substantially along the complete inner side of the housing. The inner side of the housing is herein substantially completely covered by the internal lining, with the exception of the top side of the housing at the site of the channel in the internal lining. In particular, the internal lining herein extends up to the top side of the housing, whereby, by covering the inner side of the housing substantially fully by the internal lining, the inner surface of the channel provided in the internal lining can be enlarged, whereby also the contact surface with water present in the channel increases. This boosts the rate at which water present in the channel can be taken up by the internal lining, and also reduces the chance that any pollution accumulated in the channel forms a coating over the complete surface of the channel, with the result that water cannot or can scarcely any longer penetrate the internal lining. As a result, any pollution has a lesser effect on the water-absorbing capacity of the internal lining.

If at least one of the at least one opening is provided in a bottommost part of the housing, water absorbed by the internal lining can easily, under the influence of the gravity, run via the internal lining towards the opening in the housing. This benefits the rate at which water absorbed by the internal lining can leave the infiltration gutter via the internal lining and the opening in the housing and can infiltrate into the soil.

In a further construction variant of the infiltration gutter according to the invention, the internal lining connects to at least one water conductor manufactured from water-absorbent material, wherein the water conductor is fed at least partially through at least one of the at least one opening in the housing. By means of the at least one water conductor, water can be conducted in a controlled manner from the internal lining via the water conductor through the opening in the housing, in order subsequently to infiltrate into the subsoil. Where appropriate, the water conductor can be manufactured from mineral wool, and, in particular, rock wool and/or glass wool. The advantages of mineral wool, and rock wool and/or glass wool in particular, have already been discussed within the context of the choice of material for the internal lining.

It is advantageous if the water conductor herein extends past an outer side of the housing, for which purpose the water conductor, where appropriate, has an elongated shape. The contact surface of the water conductor with the soil hereby increases, whereby the delivery of water to the subsoil can take place at an accelerated rate. In a further embodiment, the water conductor can be detachably connected to the internal lining, or can be connected in a partially detachable manner to the internal lining. The internal lining can hereby, whether or not together with the housing, be extracted from the subsoil, without the water conductor having likewise to be removed from the subsoil for this purpose. This embodiment is also advantageous if the width of that part of the water conductor which protrudes beyond the housing is greater than the width of the opening in the housing, whereby it is impossible to remove the water conductor from the subsoil through this opening in the housing. If the water conductor is detachably connected to the internal lining, the internal lining will also in this case be able to be extracted from the housing. In addition, the water conductor can be detachably connected to the internal lining in such a way that the water conductor is approachable independently from the internal lining via the inner side of the infiltration gutter and can be extracted. In a possible embodiment, the water conductor can for this purpose be guided at least partially through, and preferably fully through, the internal lining.

In yet another embodiment of the infiltration gutter according to the invention, the housing, on the top side, is provided with a grate which at least partially covers the top side of the housing. By means of the use of a grate on the generally substantially completely open top side of the housing, there is created a water-permeable supporting surface, which can serve, for example, as a component part of a road surface. Such a grate is usually manufactured from cast iron, stainless steel, galvanized steel, (plastic) concrete, or a combination thereof. Furthermore, the grate can rest on the top side of the housing, preferably such that the grate is detachably connected to the housing. The grate can herein be fastened to the housing by means of fastening means, but can likewise simply lie on the housing under the influence of its own weight. Especially in the last case, it is advantageous if the grate, at least partially, is flush-mounted with respect to the top side of the housing, wherein the housing encloses a receiving space for the grate and is preferably bounded such that the position of the grate in the plane in which the grate extends is fixed.

It is possible that the housing comprises an inside wall and an outside wall, wherein between the inside wall and the outside wall is fitted a core material, in particular concrete. Through the use of a housing having a composite structure of this type, a robust and durable construction which can withstand traffic load can be obtained, whereby the infiltration gutter can also serve as a component part of a road surface. In a common case, the inside wall and the outside wall can be manufactured from a metal, in particular steel, and more particularly stainless steel or Corten steel.

The housing can be provided with coupling means for coupling a face end of the infiltration gutter to a face end of a neighbouring infiltration gutter, whereby various infiltration gutters can be connected up to one another and can be mutually secured to form a single, elongated gutter. Such coupling means also ensure that the infiltration gutters, during coupling, are correctly aligned with respect to one another. In a common case, the coupling means are provided on the face ends of the housing. As coupling means, the housings of the infiltration gutters can be provided with one or more coupling pins, which coupling pins are designed to be received in holes likewise provided in the housings of the infiltration gutters.

The invention additionally relates to an infiltration system comprising a plurality of infiltration gutters according to the invention, which are lain with the face ends one against another. The infiltration system is herein formed by a linking together of separate infiltration gutters, which together generally form a single, elongated gutter. For the mutual securement of the linked-together infiltration gutters, coupling means can herein be used. Where appropriate, both the housing and the internal lining of the separate infiltration gutters is at the face ends completely open, or at least provided with one or more continuous holes. This opening or holes are herein positioned on the face end such that these connect to the opening or holes in the face end of a neighbouring infiltration gutter, whereby a continuous, elongated gutter is formed. The hereby formed elongated gutter can be used as a freestanding water drainage and infiltration facility, but can also be connected up to the system of sewers, whereby it becomes possible to drain off water to the sewer. This is in particular desirable when the maximum infiltration capacity, for example in the case of heavy rainfall, of the infiltration gutter is reached. Drainage of excess water to the sewer herewith prevents overflowing of the infiltration gutter.

Where appropriate, the infiltration system can be flush-mounted in a subsoil, wherein, when the infiltration system is installed in or on a subsoil, a top side of the infiltration system and a top side of the subsoil are situated substantially in the same plane. The infiltration system can herewith constitute part of a road surface. Furthermore, when the infiltration system is installed in or on a subsoil, a water conductor connecting to the internal lining can extend beyond the housing, past a hardened layer and/or a foundation layer, into a base layer situated under the aforementioned hardened layer and/or foundation layer. The take-up of water into the soil generally best happens in a base layer having high water-permeability. By extending the water conductor into a base layer having high water-permeability, the rate at which water can infiltrate from the gutter into the ground can be effectively increased. Depending on the material which is chosen for the hardened layer and/or foundation layer, the hardened layer and/or the foundation layer can be characterized by a lower water-permeability than the underlying base layer, in which case it is advantageous for the infiltration rate if the water conductor extends at least up to this underlying base layer.

The invention will be explained on the basis of non-limiting illustrative embodiments represented in the following figures. Corresponding elements are indicated in the figures with corresponding reference numerals. In the figures:
- Figure 1 shows a perspective view of a top side of an infiltration gutter according to the invention,
- Figure 2 shows a perspective view of a bottom side of the infiltration gutter shown in Figure 1,
- Figure 3 shows a cross section of the infiltration gutter shown in Figure 1,
- Figure 4 shows an internal lining for use in an infiltration gutter according to the invention,
- Figure 5 shows a perspective view of a top side of an alternative infiltration gutter according to the invention,
- Figure 6 shows a perspective view of a bottom side of the infiltration gutter shown in Figure 5,
- Figure 7 shows a perspective view of a top side of a further alternative infiltration gutter according to the invention, and
- Figure 8 shows a perspective view of a bottom side of the infiltration gutter shown in Figure 7.

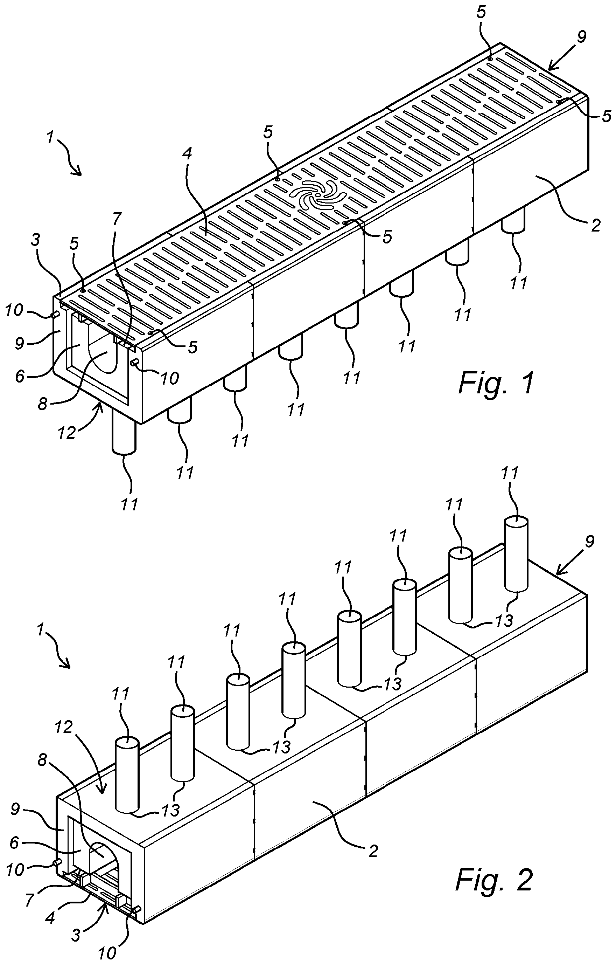

Figure 1 shows a perspective view of a top side 3 of an infiltration gutter 1 according to the invention. The infiltration gutter 1 comprises an elongated housing 2 having an open top side 3 which is covered by means of a grate 4. The grate 4 rests on the top side 3 of the housing 2 and is additionally fastened to the housing 2 by means of fastening means 5. In the housing 2 is fitted a water-absorbent internal lining 6, in which, on the top side 7, a channel 8 is provided. Furthermore, the internal lining 6 connects to the inner side of the housing 2, wherein the internal lining 6 substantially occupies the complete inner side of the housing 2. The housing 2 is on the face ends 9 provided with coupling means 10 for coupling to a face end of a neighbouring infiltration gutter. In addition, the housing 2 and the internal lining 6 are on the face ends 9 of the infiltration gutter 1 open, whereby, when a face end 9 of the infiltration gutter 1 is connected up to the face end of another infiltration gutter, a continuous gutter is formed. To the water-absorbent internal lining 6 are connected a plurality of water conductors 11, which on the bottom side 12 of the infiltration gutter 1 protrude beyond the housing 2. The infiltration gutter 1 conventionally has a length of between de 1 and 3 metres, and more particularly a length of around 2 metres. The length of an infiltration system comprising a plurality of infiltration gutters 1 is generally, however, depending on the number of linked-together infiltration gutters 1, somewhat larger. Both the width and the height of the infiltration gutter 1 are conventionally between 0.1 and 0.6 metres, wherein the width can be in particular around 0.4 and the height can be in particular around 0.3 metres.

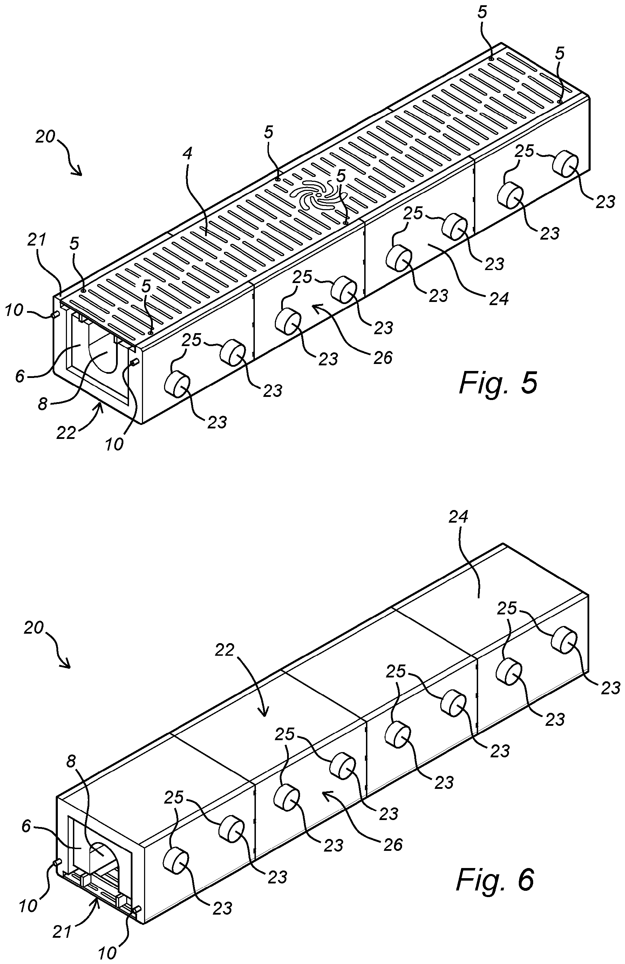

Figure 2 shows a perspective view of a bottom side 12 of the infiltration gutter 1 shown in Figure 1, wherein the water conductors 11 provided on the bottom side 12 of the infiltration gutter 1 are clearly visible. For the feed-through of these water conductors 11, the housing 2 is provided on the longitudinal side - and in the shown case the bottom side 12 -with openings 13 situated at a distance from the water-permeable top side 3. Although, in the shown embodiment of the infiltration gutter 1, a plurality of water conductors 11 are used, it is also possible to use a single water conductor, which, whether or not, extends over a greater part of the length of the infiltration gutter 1 than each of the shown water conductors 11. As can be seen from Figures 5-9, an alternative placement of the water conductors 11 and of holes 13 provided in the housing 2 is likewise possible. Although the water conductors 11 in Figures 1 and 2 have the same length, it is likewise conceivable that the water conductors 11 differ from one another in length, wherein the chosen length, for example, is dependent on the composition of the underlying soil in which the infiltration gutter 1 is placed.

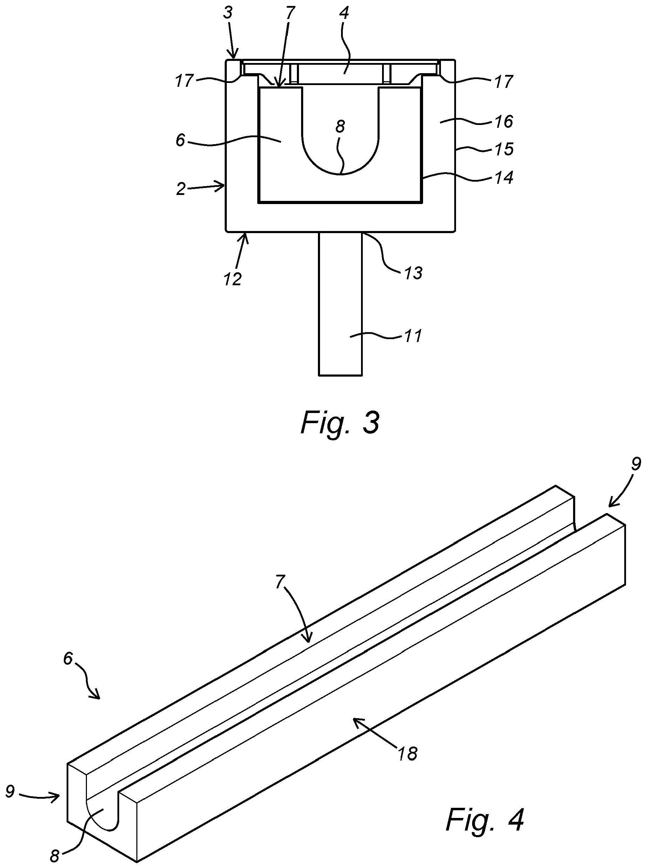

Figure 3 shows a cross section of the infiltration gutter 1 shown in Figures 1 and 2, in which the internal lining, the housing 2, the grate 4 and the water conductor 11 are clearly discernible. In the shown embodiment, the housing 2 comprises an inside wall 14 and an outside wall 15 - which generally are manufactured from a metal or a plastic -between which a core material 16, such as a cement concrete or a polymer concrete, is fitted. It is likewise conceivable, however, that the housing 2 is made of a single material, such as one of the above-mentioned concrete, plastic or metal varieties. In the top side of the housing 2 are provided recesses 17, whereby a receiving space for the grate 4, in which the grate 4 can rest flush-mounted on the housing 2 and is fixed in the horizontal direction, is formed. On the bottom side 12 of the housing 2 is provided at least one opening 13 for the feed-through of the at least one water conductor 11. The length of the water conductors 11 is preferably chosen such that water conductors 11 extend into a base layer having high water-permeability in order to relay the water collected in the infiltration gutter 1 to the subsoil. The course of the water conductors 11 can be different than in the shown form and, irrespective of the position at which the water conductors 11 connect to the housing 2, also non-rectilinear, wherein the water conductors have a curved shape or describe a number of discrete angles.

Figure 4 shows an internal lining 6 for use in an infiltration gutter 1 according to the invention. The internal lining 6 is manufactured from a water-absorbent material, and preferably a mineral wool such as glass wool or rock wool. The internal lining 6 is hence capable of retaining water and transferring it to a subsoil. For a good absorbing effect, it is advantageous if the internal lining 6 is used uncovered, that is to say without encasement by a geotextile or other kind of cladding. In the internal lining 6 is provided on one side a channel 8, the open side 7 of which, when placed in a housing 2 or a subsoil, is usually facing upwards for the collection of water. Where appropriate, the internal lining 6 is fitted in a housing 2, wherein the internal lining 6 is placed loosely or under clamping in the housing 2. A more definitive fastening of the internal lining 6 to the housing 2, for example by the use of an adhesive or of fastening means, is likewise possible. It is also conceivable, however, that the internal lining 6 is fitted as a stand-alone gutter in a subsoil, wherein the water-absorbent material whereof the internal lining 6 is made also acts as a water buffer. Where appropriate, the shape of the outer side 18 of the internal lining 6 is consistent with the shape of the inner side of the housing 2, so that the internal lining 6 substantially connects to the housing 2. The internal lining 6 is here preferably dimensioned such that the height and width thereof substantially tally with the height and width of the housing 2, whereby the internal lining 6 extends substantially along the complete inner side of the housing 2.

Figures 5 and 6 show a perspective view of a top side 21 and bottom side 22, respectively, of an alternative infiltration gutter 20 according to the invention. A difference between this embodiment and the embodiment of the infiltration gutter 1 as shown in Figures 1-3 is the placement of the water conductors 11, 23 and of the openings 13, 25 provided at a distance from the top side 21 of the housing 2, 24 in the housing 2, 24, where the water conductors 11, 23 are fed through. Where the openings 13 and water conductors 11 in the embodiment of the infiltration gutter 1 as shown in Figures 1-3 were provided on the bottom side 12 of the housing 2, the openings 25 and water conductors 23 are this time provided on opposite side edges 26 of the housing 24. The bottom side 22 is in this case closed. It is also possible, however, that additional openings are provided in the bottom side 22 of the housing 24 in order to speed up the infiltration of water into the subsoil.

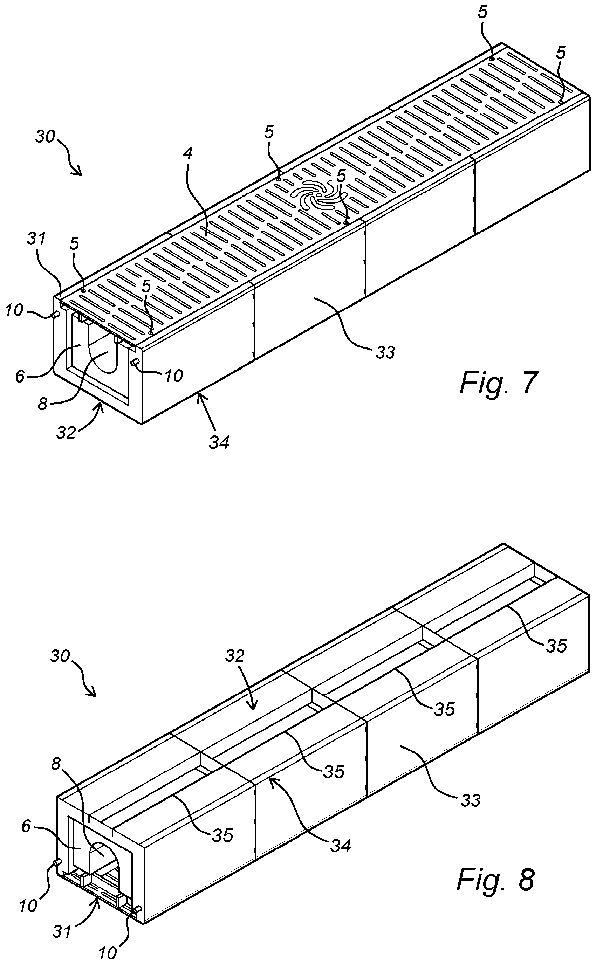

Finally, Figures 7 and 8 show a perspective view of a top side 31 and bottom side 32, respectively, of a further alternative infiltration gutter 30 according to the invention. A difference between this embodiment and the embodiments of the infiltration gutter 1 as shown in Figures 1-3 and Figures 5-6 is the absence of water conductors 11, 23. Nevertheless, the housing 33 is on the longitudinal side 34 (in this case the bottom side) provided with some openings 35 situated at a distance from the water-permeable top side 31 (see Figure 8), whereby water present in the infiltration gutter 30, and. in particular, taken up by the internal lining 6, can be conducted in the direction of the subsoil and can infiltrate into the subsoil.

It should be clear that the invention is not limited to the illustrative embodiments which are here represented and described, but that, within the scope of the appended claims, countless variants which will be obvious to the person skilled in the art are possible. It is herein conceivable that different inventive concepts and/or technical measures of the above-described construction variants can be combined in full or in part without departing from the inventive concept described in the appended claims.

## Claims

1. Infiltration gutter (1) for drainage and soil infiltration of water, comprising:
- an elongated housing (2) having a water-permeable top side (3), and
- an internal lining (6), fitted in the housing (2) and manufactured from a water-absorbent material, which is provided with a channel (8) that is open on the top side (7),
wherein the housing (2), on a longitudinal side, is provided with at least one opening (13) situated at a distance from the water-permeable top side (3),
**characterised in that**
the internal lining (6) connects to at least one water conductor (11) manufactured from water-absorbent material, wherein the water conductor (11) is fed at least partially through at least one of the at least one opening (13) in the housing (2).

2. Infiltration gutter (1) according to claim 1, wherein the internal lining (6) is manufactured from mineral wool, and, in particular, rock wool and/or glass wool.

3. Infiltration gutter (1) according to one of the preceding claims, wherein the internal lining (6) forms the outer surface of the channel (8).

4. Infiltration gutter (1) according to one of the preceding claims, wherein the internal lining (6) extends substantially along the complete inner side of the housing (2), preferably
, wherein at least one of the at least one opening (13) is provided in a bottommost part of the housing (2).

5. Infiltration gutter (1) according to one of the preceding claims , wherein the water conductor (11) extends past an outer side of the housing (2).

6. Infiltration gutter (1) according to one of the preceding claims, wherein the water conductor (11) is manufactured from mineral wool, and, in particular, rock wool and/or glass wool.

7. Infiltration gutter (1) according to one of the preceding claims, wherein the water conductor (11) is detachably connected to the internal lining (6).

8. Infiltration gutter (1) according to one of the preceding claims, wherein the housing (2), on the water-permable top side (3), is provided with a grate (4) which at least partially covers the water-permable top side (3) of the housing (2),, preferably
, wherein the grate (4) rests on the water-permable top side (3) of the housing (2), preferably such that the grate (4) is detachably connected to the housing (2).

9. Infiltration gutter (1) according to one of the preceding claims, wherein the housing (2) comprises an inside wall (14) and an outside wall (15), and wherein between the inside wall (14) and the outside wall (15) is fitted a core material (16), in particular concrete, preferably , wherein the inside wall (14) and the outside wall (15) are manufactured from a metal, in particular steel, and more particularly stainless steel or Corten steel.

10. Infiltration gutter (1) according to one of the preceding claims, wherein the housing (2) is provided with coupling means (10) for coupling a face end (9) of the infiltration gutter to a face end (9) of a neighbouring infiltration gutter.

11. Infiltration system comprising a plurality of infiltration gutters (1) according to one of the preceding claims, said infiltration gutters (1) are lain with the face ends (9) one against another.

12. Infiltration system according to claim 11, wherein the infiltration system is flush-mounted in a subsoil, wherein a top side of the infiltration system and a top side of the subsoil are situated substantially in the same plane.

13. Infiltration system according to claim 11 or 12, wherein a water conductor (11) connecting to the internal lining (6) extends beyond the housing (2) past a hardened layer and/or a foundation layer into a base layer situated under the aforementioned hardened layer and/or foundation layer.

## Patentansprüche

1. Versickerungsrinne (1) zur Entwässerung und Bodenversickerung von Wasser, umfassend:
- ein längliches Gehäuse (2) mit einer wasserdurchlässigen Oberseite (3), und
- eine in das Gehäuse (2) eingepasste innere Verkleidung (6) aus wasserabsorbierendem Material, die mit einem auf der Oberseite (7) offenen Kanal (8) versehen ist,
wobei das Gehäuse (2) an einer Längsseite mit mindestens einer von der wasserdurchlässigen Oberseite (3) beabstandeten Öffnung (13) versehen ist,
**dadurch gekennzeichnet, dass**
die innere Verkleidung (6) an mindestens einen aus wasserabsorbierendem Material gefertigten Wasserleiter (11) anschließt, wobei der Wasserleiter (11) zumindest teilweise durch mindestens eine der mindestens einen Öffnung (13) in dem Gehäuse (2) geführt ist.

2. Versickerungsrinne (1) nach Anspruch 1, wobei die innere Verkleidung (6) aus Mineralwolle, insbesondere Steinwolle und/oder Glaswolle gefertigt ist.

3. Versickerungsrinne (1) nach einem der vorhergehenden Ansprüche, wobei die innere Verkleidung (6) die Außenoberfläche des Kanals (8) ausbildet.

4. Versickerungsrinne (1) nach einem der vorhergehenden Ansprüche, wobei sich die innere Verkleidung (6) im Wesentlichen entlang der gesamten Innenseite des Gehäuses (2) erstreckt, wobei vorzugsweise mindestens eine der mindestens einen Öffnung (13) in einem untersten Teil des Gehäuses (2) bereitgestellt ist.

5. Versickerungsrinne (1) nach einem der vorhergehenden Ansprüche, wobei sich der Wasserleiter (11) über eine Außenseite des Gehäuses (2) hinaus erstreckt.

6. Versickerungsrinne (1) nach einem der vorhergehenden Ansprüche, wobei der Wasserleiter (11) aus Mineralwolle, insbesondere Steinwolle und/oder Glaswolle, gefertigt ist.

7. Versickerungsrinne (1) nach einem der vorhergehenden Ansprüche, wobei der Wasserleiter (11) lösbar mit der inneren Verkleidung (6) verbunden ist.

8. Versickerungsrinne (1) nach einem der vorhergehenden Ansprüche, wobei das Gehäuse (2) auf der wasserdurchlässigen Oberseite (3) mit einem Rost (4) versehen ist, der die wasserdurchlässige Oberseite (3) des Gehäuses (2) mindestens teilweise abdeckt, vorzugsweise wobei der Rost (4) auf der wasserdurchlässigen Oberseite (3) des Gehäuses (2) aufliegt, vorzugsweise derart, dass der Rost (4) lösbar mit dem Gehäuse (2) verbunden ist.

9. Versickerungsrinne (1) nach einem der vorhergehenden Ansprüche, wobei das Gehäuse (2) eine Innenwand (14) und eine Außenwand (15) aufweist und wobei zwischen der Innenwand (14) und der Außenwand (15) ein Kernmaterial (16), insbesondere Beton, verbaut ist, vorzugsweise wobei die Innenwand (14) und die Außenwand (15) aus einem Metall, insbesondere Stahl, insbesondere Rostfrei-Stahl oder Cortenstahl, gefertigt sind.

10. Versickerungsrinne (1) nach einem der vorhergehenden Ansprüche, wobei das Gehäuse (2) mit Kopplungsmitteln (10) zum Koppeln einer Stirnseite (9) der Versickerungsrinne mit einer Stirnseite (9) einer benachbarten Versickerungsrinne versehen ist.

11. Versickerungsvorrichtung mit einer Vielzahl von Versickerungsrinnen (1) nach einem der vorhergehenden Ansprüche, wobei die Versickerungsrinnen (1) mit den Stirnseiten (9) aneinander liegen.

12. Versickerungsvorrichtung nach Anspruch 11, wobei das Versickerungssystem bündig in einen Untergrund eingebaut ist, wobei eine Oberseite der Versickerungsvorrichtung und eine Oberseite des Untergrunds im Wesentlichen in derselben Ebene liegen.

13. Versickerungsvorrichtung nach Anspruch 11 oder 12, wobei sich ein mit der inneren Verkleidung (6) verbundener Wasserleiter (11) über das Gehäuse (2) hinaus über eine gehärtete Schicht und/oder eine Fundamentschicht hinaus in eine unter der gehärteten Schicht und/oder Fundamentschicht liegende Basisschicht erstreckt.

## Revendications

1. Gouttière d'infiltration (1) pour le drainage et l'infiltration dans le sol de l'eau, comprenant :
- un boîtier allongé (2) ayant un côté supérieur perméable à l'eau (3), et
- une garniture interne (6), installée dans le boîtier (2) et fabriquée à partir d'un matériau absorbant l'eau, qui est pourvue d'un canal (8) qui est ouvert sur le côté supérieur (7),
dans laquelle le boîtier (2), sur un côté longitudinal, est pourvu d'au moins une ouverture (13) située à une distance du côté supérieur perméable à l'eau (3),
**caractérisée en ce que**
la garniture interne (6) se raccorde à au moins une conduite pluviale (11) fabriquée à partir d'un matériau absorbant l'eau, dans laquelle la conduite pluviale (11) est introduite au moins partiellement par au moins une de l'au moins une ouverture (13) dans le boîtier (2).

2. Gouttière d'infiltration (1) selon la revendication 1, dans laquelle la garniture interne (6) est fabriquée à partir de laine minérale, et en particulier de laine de roche et/ou de laine de verre.

3. Gouttière d'infiltration (1) selon une des revendications précédentes, dans laquelle la garniture interne (6) forme la surface externe du canal (8).

4. Gouttière d'infiltration (1) selon une des revendications précédentes, dans laquelle la garniture interne (6) s'étend sensiblement le long du côté interne complet du boîtier (2), de préférence
dans laquelle au moins une de l'au moins une ouverture (13) est disposée dans une partie la plus basse du boîtier (2).

5. Gouttière d'infiltration (1) selon une des revendications précédentes, dans laquelle la conduite pluviale (11) s'étend au-delà d'un côté externe du boîtier (2).

6. Gouttière d'infiltration (1) selon une des revendications précédentes, dans laquelle la conduite pluviale (11) est fabriquée à partir de laine minérale, et en particulier de laine de roche et/ou de laine de verre.

7. Gouttière d'infiltration (1) selon une des revendications précédentes, dans laquelle la conduite pluviale (11) est raccordée de façon détachable à la garniture interne (6).

8. Gouttière d'infiltration (1) selon une des revendications précédentes, dans laquelle le boîtier (2), sur le côté supérieur perméable à l'eau (3), est pourvu d'une grille (4), qui recouvre au moins partiellement le côté supérieur perméable à l'eau (3) du boîtier (2), de préférence
dans laquelle la grille (4) repose sur le côté supérieur perméable à l'eau (3) du boîtier (2), de préférence de telle sorte que la grille (4) est raccordée de façon détachable au boîtier (2).

9. Gouttière d'infiltration (1) selon une des revendications précédentes, dans laquelle le boîtier (2) comprend une paroi intérieure (14) et une paroi extérieure (15), et dans laquelle, entre la paroi intérieure (14) et la paroi extérieure (15), est installé un matériau de coeur (16), en particulier du béton, de préférence dans laquelle la paroi intérieure (14) et la paroi extérieure (15) sont fabriquées à partir d'un métal, en particulier d'acier, et plus particulièrement d'acier inoxydable ou d'acier Corten.

10. Gouttière d'infiltration (1) selon une des revendications précédentes, dans laquelle le boîtier (2) est pourvu de moyens de couplage (10) pour coupler une extrémité de face (9) de la gouttière d'infiltration à une extrémité de face (9) d'une gouttière d'infiltration voisine.

11. Système d'infiltration comprenant une pluralité de gouttières d'infiltration (1) selon une des revendications précédentes, lesdites gouttières d'infiltration (1) étant posées avec les extrémités de face (9) les unes contre les autres.

12. Système d'infiltration selon la revendication 11, le système d'infiltration étant encastré dans un sous-sol, un côté supérieur du système d'infiltration et un côté supérieur du sous-sol étant situés sensiblement dans le même plan.

13. Système d'infiltration selon la revendication 11 ou 12, dans lequel une conduite pluviale (11) se raccordant à la garniture interne (6) s'étend au-delà du boîtier (2) après une couche durcie et/ou une couche de fondation jusqu'à l'intérieur d'une couche de base située sous la couche durcie et/ou la couche de fondation susmentionnées.
